# EUROPÄISCHE PATENTSCHRIFT

(11) **EP 2 021 424 B1**
(45) Veröffentlichungstag und Bekanntmachung des Hinweises auf die Patenterteilung: **20.08.2014**
(21) Anmeldenummer: 07729398.3
(22) Anmeldetag: 22.05.2007
(51) Int. Cl.: C09D 185/00, D06M 15/643, C09D 4/00, C09D 183/14

(54) **MIT WASSER VERDÜNNBARE KONZENTRATE ZUR BESCHICHTUNG VERSCHIEDENER SUBSTRATE**
WATER-DILUTABLE CONCENTRATES FOR COATING DIFFERENT SUBSTRATES
CONCENTRÉS DILUABLES DANS L'EAU POUR L'APPLICATION DE REVÊTEMENTS SUR DIFFÉRENTS SUBSTRATS

(30) Priorität: 26.05.2006 DE 102006024727
(43) Veröffentlichungstag der Anmeldung: 11.02.2009
(73) Patentinhaber: CHT R. BEITLICH GmbH, 72072 Tübingen (DE)
(72) Erfinder: BRÜCKMANN, Ralf, 72076 Tübingen (DE); LUTZ, Harald, 72124 Pliezhausen (DE); KOCH, Matthias, 70794 Filderstadt (DE); SCHIRRA, Hermann, 66111 Saarbrücken (DE); KREISCHER, Dirk, 66440 Blieskastel (DE)
(74) Vertreter: Von Kreisler Selting Werner - Partnerschaft von Patentanwälten und Rechtsanwälten mbB
(86) Internationale Anmeldenummer: PCT/EP2007/054959
(87) Internationale Veröffentlichungsnummer: WO 2007/137971

(56) Entgegenhaltungen:
- EP-A- 0 555 879
- EP-A- 0 844 283
- WO-A-2006/010388

## Beschreibung

Gegenstand der vorliegenden Erfindung **ist ein Verfahren zur Herstellung von konzentrierten, anorganischen/organischen Solen,** die leicht mit Wasser zu Beschichtungsmitteln für textile Materialien verdünnbar sind. Weiterhin wird die Verwendung der wässrigen Zubereitungen insbesondere zur waschpermanenten Beschichtung eines textilen Materials beschrieben.

Unter anderem in der Textiltechnik ist man bestrebt, durch die Nachbehandlung von textilen Materialien durch Beschichtung oder Ausrüstung die physikalischen mechanischen Eigenschaften nachhaltig zu verbessern; zusätzlich sollen dem Material neue Eigenschaften wie beispielsweise verbesserter Weichgriff, Hydrophilie, Hydrophobie, antimikrobielle Wirksamkeit, Flamm- oder UV-Schutz verliehen werden. Diese Eigenschaften werden durch die Applikation unterschiedlichster Ausrüstungsmittel erzielt.

Die Beschichtung oder Ausrüstung eines textilen Materials, speziell für den Bekleidungsbereich, unterliegt einer ständigen Belastung wie beispielsweise Bewegung, Reibung oder der Haushaltswäsche, der jede gebrauchstüchtige Textilie bis zu hundert Mal ausgesetzt ist. Die Haushaltswäsche stellt für das Textil und die applizierte Beschichtung eine extrem große Belastung dar. Eine waschpermanente Beschichtung oder Ausrüstung darf weder durch Quellung der Faser, durch mechanische Belastung noch durch Tenside oder Alkali geschädigt werden. Besonders wichtig ist die Alkaliresistenz, die eine waschpermanente Ausrüstung aufweisen muss, denn um eine möglichst gute Schmutzentfernung während einer Haushaltswäsche zu erhalten, ist ein hoher pH-Wert der Waschflotte notwendig. Schmutz und Textilfaser werden negativ aufgeladen und damit die elektrostatischen Abstoßungskräfte verstärkt. Um die Alkalität zu erhöhen, wird dem Waschmittel Soda zugesetzt. Daher erzielen handelsübliche Vollwaschmittel in der Waschlauge einen pH-Wert von 10 bis 11. Wie allgemein bekannt ist, werden viele Beschichtungen unter diesen Bedingungen chemisch angegriffen und sukzessiv abgewaschen. Spezielle chemische Bindungen wie beispielsweise in Estergruppen oder Silizium-Sauerstoffbindungen, wie sie in Silikonverbindungen vorliegen, können im alkalischen Milieu gespalten werden. Eine permanente Beschichtung sollte gleichmäßig und sehr engmaschig vernetzt sein, damit der Waschflotte keine Angriffspunkte geboten werden. Um dies zu gewährleisten, muss das Beschichtungsmittel über ein hohes Maß an Vernetzungspunkten verfügen. Aus diesem Grund benötigt man für die Herstellung solcher Zubereitungen Edukte, die eine hohe Anzahl an reaktiven Gruppen aufweisen, die eine Vernetzung untereinander oder eine Reaktion mit dem Substrat eingehen können.

Als hochreaktive, quervernetzende Beschichtungsmittel für Gläser und polymere Kunststoffe sind Sol-Gel-Systeme auf der Basis anorganischer/organischer Komposite allgemein bekannt. Hierfür eingesetzte Sole sind meist sehr verdünnte, Lösemittel basierende Systeme mit einem maximalen Festkörperanteil von 5 bis 10 %. Durch längere Lagerung, Zugabe von Wasser, thermische Belastung oder Aufkonzentrierung verlieren die Sole stark an Stabilität und gehen in den nicht mehr verarbeitbaren Gelzustand über.

Für den industriellen Maßstab in der Textiltechnik konnten derartige Systeme bisher keinen Eingang finden. Dies ist darauf zurückzuführen, dass in der Textilindustrie fast alle Prozesse und Maschinen für die Applikation aus wässrigen Bädern und Anwendungsflotten abgestimmt sind und somit stark alkohol- bzw. lösemittelhaltige Systeme nicht zum Einsatz kommen.

Dies ist darauf zurückzuführen, dass in fast allen Textilveredlungsbetrieben die Trocknung und Fixierung in nicht explosionsgesicherten Anlagen durchgeführt werden, die zum Teil noch durch eine offene Flamme beheizt werden. Aus diesem Grund ist es zwingend notwendig Produkte einzusetzen, die einen unproblematischen Flammpunkt aufweisen.

In der Regel werden in der Textilveredlungsindustrie Konzentrate mit Wasser zu ihrer Anwendungskonzentration verdünnt. Somit ist eine maximale Wasserverdünnbarkeit der eingesetzten Konzentrate von größter Wichtigkeit. Aus diesem Grund ist die geringe Wasserverträglichkeit bzw. die geringe Wasserstabilität literaturbekannter Sole ein weiterer Aspekt warum bislang Sole in der Textilveredlungsindustrie keine Anwendung gefunden haben.

Durch die Verdünnung Alkohol basierender Sole mit Wasser zu den textilen Anwendungskonzentrationen, weisen die Zubereitungen eine starke Neigung zur Hydrolyse und Kondensation auf. Die Flotten trüben nach kurzer Zeit ein und gegebenenfalls fällt ein Metalloxid als Feststoff aus. Derartige instabile Systeme sind für den Einsatz als Ausrüstungsmittel für einen gleichmäßigen Auftrag auf das Textil nicht geeignet. Versucht man zur Erhöhung des Flammpunktes den durch die Hydrolyse frei gewordenen Alkohol z.B. destillativ zu entfernen werden die Sole destabilisiert und es bildet sich ein wasserunlösliches Gel, das eine weitere Verarbeitung deutlich erschwert bzw. unmöglich macht. Konzentrierte Sole zur Zubereitung von Beschichtungssystemen für die textile Applikation müssen leicht mit Wasser verdünnbar sein, dürfen keinen niedrigen Flammpunkt aufweisen und müssen über den gesamten Ausrüstungsprozess in wässrigen Bädern und Anwendungsflotten stabil sein.

In US 2004/0117915 A1 wird eine multifunktionelle nanoskalige Oberflächenbehandlung für Textilien beschrieben. Hierbei wird eine Metalloxidmatrix zur Verbesserung der Oberflächeneigenschaften appliziert. Es wird darauf hingewiesen, dass das Textil sowie die Nanosol-Zubereitung während der Applikation wasserfrei sein müssen.

In DE 19756906 A1 werden Beschichtungsmittel für textile und polymere Materialien beansprucht. Das Beschichtungsmittel wird aus drei Komponenten, a) ein Schicht bildendes Organosol, b) ein Aluminium- oder Zirkoniumhalogenid sowie einer vernetzenden Verbindung mit mindestens zwei Hydroxylgruppen hergestellt, die für sich lagerstabil sind, aber erst unmittelbar vor der Beschichtung gemischt werden und als Mischung nur eine sehr begrenzte Stabilität aufweist.

In DE 19816136 A1 werden nanostrukturierte Formkörper und Schichten und deren Herstellung über stabile Wasser lösliche Vorstufen beschrieben. Hierbei werden wässrige, kolloidale Suspensionen mit reaktiven monomeren oder oligomeren Komponenten beschichtet. So können wässrige Sole wie beispielsweise Böhmit-, TiO₂-, ZrO₂-, oder SiO₂-Sole derart umgesetzt werden, dass nach der Aufkonzentrierung und gegebenenfalls Dispergierung des flüssigen Rückstandes in Wasser klare Lösungen erhalten werden, die über einen längeren Zeitraum stabil sind, wobei das Abziehen des Lösemittels für die Stabilisierung des Systems erforderlich ist. Bei den beschriebenen reaktiven Komponenten handelt es sich um verschiedene Silane, mit denen die Sole umgesetzt werden. Die dabei entstehenden Silizium-Sauerstoffbindungen sind aufgrund der geringeren Alkalistabilität nicht ausreichend waschecht. Die derart hergestellten Systeme werden für optische Zwecke auf Gläser, Kunststoffe sowie Metalle aufgebracht.

In DE 10063519 A1 werden lösungsmittelarme Sol-Gel-Systeme beschrieben, die durch a) die Hydrolyse oder Kondensation eines Silans, eines Alkoxids oder mehrerer Alkoxide verschiedener Haupt- oder Nebengruppenelementen und b) der Zugabe von Wasser bis zur Phasentrennung sowie c) der Abtrennung der Kondensatphase erhältlich sind. Die in Wasser unlösliche Kondensatphase kann nur mit Hilfe eines Dispergiermittels wieder in Wasser aufgenommen werden, die daraus resultierende Dispersion wird als Bindemittel für verschiedene Substrate eingesetzt.

EP 555 879 A1 **betrifft eine Beschichtungszusammensetzung und ein Verfahren zu dessen Herstellung. Die Beschichtungszusammensetzung wird hergestellt durch Zugabe von 0 bis 150 Gew.-Teilen eines Diorganosilans, eines Hydrolysats und/oder eines Teilkondensats eines Diorganosilans (b), 2 bis 300 Gew.-Teile eines Vinylharzes mit einer Silylgruppe (c), 0,01 bis 50 Gew.-Teile einer Metallchelat-Verbindung (d), und einem organischen Lösungsmittel (e) zu 100 Gew.-Teilen eines Organosilans eines Hydrolysats und/oder eines Teilkondensats eines Organosilans (a), zu dem zwei oder mehr Mol eines β-Diketons und/oder eines β-Ketoesters (f) auf 1 Mol der Metallchelat-Verbindung (d) gegeben werden.**

EP 1 252 214 B1 betrifft eine organometallische Zusammensetzung, die einen Komplex von wenigstens einem Orthoester eines Metalls mit der Formel M(ROAcAc)ₓ(OR')_{y} umfasst, worin
(a) M aus der Gruppe ausgewählt ist, die besteht aus Titan, Zirconium und Hafnium;
(b) ROAcAc einen Ester eines Alkohols ROH, wobei R eine (gegebenenfalls substituierte) C₁₋₃₀ cyclische, verzweigtkettige oder geradkettige Alkyl-, Alkenyl-, Aryl- oder Alkyl-Aryl-Gruppe oder eine Mischung davon umfasst, mit Acetessigsäure bezeichnet;
(c) OR' der Rest eines Alkohols R'OH ist, wobei R' eine (gegebenenfalls substituierte) C₇₋₃₀ cyclische, verzweigtkettige oder geradkettige Alkyl-, Alkenyl-, Aryl- oder Alkyl-Aryl-Gruppe oder eine Mischung davon umfasst, und
(d) x und y jeweils im Bereich 1 bis 3 liegen und x + y = 4;
wobei dann, wenn M Zirconium ist, R' nicht aus einer C₇₋₈-Alkyl- oder Alkoxyalkyl-Gruppe besteht.

WO 03/093383 A1 beschreibt Substrate, die mit einer Biofilmhemmenden Beschichtung aus einem mit organischen Gruppen modifizierten anorganischen Kondensat versehen sind, wobei zumindest ein Teil der organischen Gruppen des Kondensats Fluoratome aufweist und Kupfer- oder Silberkolloide in der Beschichtung enthalten sind.

Der vorliegenden Erfindung liegt die Aufgabe zugrunde, stabile, konzentrierte, anorganische/organische Sole zur Verfügung zu stellen, die ohne Dispergierhilfsmittel leicht mit Wasser zu Beschichtungsmitteln insbesondere für textile Materialien verdünnbar sind, insbesondere das Konzentrat durch die Entfernung der niedrig siedenden Alkohole einen Flammpunkt von wenigstens 65 °C, insbesondere wenigstens 100 °C aufweist. Es ist weiterhin Aufgabe der vorliegenden Erfindung insbesondere textile Materialien mit applizierten Beschichtungen zur Verfügung zu stellen, die deutlich verbesserte Waschpermanenzen aufweisen, wobei die ausgerüsteten Textilien eine geringere Schädigung durch das Waschen erfahren.

Die vorgenannte Aufgabe wird in einer ersten Ausführungsform gelöst durch ein Verfahren zur Herstellung von Sol basierenden wasserverdünnbaren Konzentraten durch Abmischung folgender Komponenten;
(A) 0,5 bis 25 Gew.-% eines Organosols, erhältlich durch Hydrolyse und Kondensation eines oder mehrerer Trialkoxysilane und/oder Dialkoxysilane der allgemeinen Formel I

   R₄₋ₓSi(OR')ₓ (I)

   wobei
   R für gleiche oder verschiedene über ein C-Atom an das Siliziumatom gebundene, gegebenenfalls substituierte Kohlenwasserstoffgruppen mit 1 bis 22 C-Atomen steht, die gegebenenfalls durch Sauerstoff, Schwefel, Stickstoff oder die Gruppe NR", mit R" gleich Wasserstoff oder C₁ bis C₁₄-Alkyl unterbrochen sind,
   die Reste R' gleich oder verschieden voneinander, jeweils eine gegebenenfalls substituierte Kohlenwasserstoffgruppe mit 1 bis 8 Kohlenstoffatomen darstellen, die gegebenenfalls durch Sauerstoff, Schwefel, Stickstoff oder die Gruppe NR" mit der oben genannten Bedeutung unterbrochen sind und
   x 2 oder 3 ist,
(B) 4 bis 55 Gew.-% eines oder mehrerer Alkoxide der allgemeinen Formel II

   Me (OR')ₙ (II)

   wobei
   Me für Ti, Zr, Hf, Al, n für die Wertigkeit des Metallkations steht und R' die oben genannte Bedeutung hat,
(C) 0,1 bis 15 Gew.-% eines oder mehrerer Komplexbildners zur Reduktion der Hydrolysegeschwindigkeit der Komponenten (A) und (B) und
(D) 5 bis 95 Gew.-% eines wasserverträglichen oder mit Wasser mischbaren Lösemittels mit einem Siedepunkt von wenigstens 150°C,
   jeweils bezogen auf 100 Gew.-% der Komponenten (A), (B), (C) und (D),
**und anschließender destillativer Entfernung von Alkoholen mit einem Siedepunkt von bis zu 150°C, zur Einstellung des Flammpunktes, und gegebenenfalls Zugabe von Wasser,** wobei man im Anschluss an die Reaktion gegebenenfalls den bei der Hydrolyse entstehenden Alkohol destillativ, um den Flammpunkt einzustellen.

Das obengenannte Organosol kann durch an sich bekannte Hydrolyse und Kondensation des Alkoxysilans, insbesondere ohne Anwesenheit von Dispergiermitteln erhalten werden. Beispielsweise ist es möglich, ein entsprechendes Alkoxysilan mit einer wässrigen sauren Lösung zu versetzen, so dass ein entsprechendes insbesondere klares Hydrolysat erhalten wird.

Beispiele für Reste R in der obigen Formel sind lineare und/oder verzweigte Alkyl-, Alkenyl-, Aryl-, Alkylaryl-, Arylalkyl-, Arylalkenyl-, Alkenylaryl-Reste (vorzugsweise mit jeweils 1 bis 22 und insbesondere 1 bis 16 Kohlenstoffatomen und cyclische Formen einschließend), die durch Sauerstoff-, Schwefel-, Stickstoffatome oder die Gruppe NR" (R" = Wasserstoff oder C₁₋₁₄-Alkyl) unterbrochen sein können und einen oder mehrere Substituenten aus der Gruppe der Halogene und der gegebenenfalls substituierten Amino-, Amid-, Carboxy-, Mercapto-, Isocyanato-, Hydroxy-, Alkoxy-, Alkoxycarbonyl-, Acryloxy-, Methacryloxy-, Epoxy- oder perfluorierte Alkylgruppen tragen können. Besonders bevorzugt befindet sich unter den obigen Alkoxysilanen der allgemeinen Formel (I) mindestens eines, in welchem mindestens ein Rest R über eine Gruppierung verfügt, die eine Polyadditions-(einschließlich Polymerisations-) oder Polykondensationsreaktion eingehen kann.

Bei dieser zur Polyadditions- oder Polykondensationsreaktion befähigten Gruppierung handelt es sich vorzugsweise um eine Epoxygruppe oder (vorzugsweise aktivierte) Kohlenstoff-Kohlenstoff-Mehrfachbindungen (insbesondere Doppelbindungen), wobei eine (Meth)acrylatgruppe ein besonders bevorzugtes Beispiel für die letztgenannten Gruppierungen ist.

Demgemäss sind besonders bevorzugte organisch modifizierte Alkoxysilane der allgemeinen Formel (I) zur Verwendung in der vorliegenden Erfindung solche, in denen x 3 ist und ein Rest (der einzige Rest) R für ω-Glycidyloxy-C₂₋₆-alkyl oder ω-(Meth)acryloxy-C₂₋₆-alkyl steht.

Konkrete Beispiele für derartige Alkoxysilane sind 3-Glycidoxypropyltri(m)ethoxysilan, 3,4-Epoxybutyltrimethoxysilan und 2-(3,4-Epoxycyclohexyl)ethyltrimethoxysilan sowie 3-(Meth)acryloxy-propyltri(m)ethoxysilan und 2-(Meth)acryloxyethyltri(m)ethoxysilan. Weitere Beispiele für geeignete Verbindungen mit x = 1 oder 2 sind 3-Glycidoxypropyldimethyl(m)ethoxysilan, 3-Glycidoxypropylmethyldi(m)-ethoxysilan, 3-(Meth)-acryloxypropylmethyldi(m)ethoxysilan und 2-(Meth)acryloxyethylmethyldi(m)ethoxysilan.

Weitere Alkoxysilane, die bevorzugt in Kombination mit Alkoxysilanen mit den obigen zur Polyadditions- bzw. Polykondensationsreaktion befähigten Gruppierungen eingesetzt werden können, sind beispielsweise Tetramethoxysilan, Tetraethoxysilan, Tetra-n-propoxysilan, Tetra-n-butoxysilan, Hexadecyltrimethoxysilan, Cyclo-hexyltrimethoxysilan, Cyclopentyltrimethoxysilan, Ethyltrimethoxysilan, Phenylethyltrimethoxysilan, Phenyltrimethoxysilan, n-Propyltri-methoxysilan, Cyclohexylmethyldimethoxysilan, Dimethyldimethoxysilan, Diisopropyldimethoxysilan, Phenylmethyldimethoxysilan, Phenylethyltriethoxysilan, Phenyltriethoxysilan, Phenylmethyldiethoxy-silan und Phenyldimethylethoxysilan. Die genannten organisch modifizierten Alkoxysilane können auch als solche eingesetzt werden.

Wird im Verlauf der Reaktion dann weiterhin wenigstens ein Alkoxid der allgemeinen Formel (II) mit dem Hydrolysat zusammengegeben, so tritt bereits eine erste Reaktion ein.

Die erfindungsgemäß eingesetzten Alkoxide (Komponente B) der allgemeinen Formel (II) sind sehr reaktiv, so dass in Abwesenheit des Komplexbildners (C) die Komponenten (A) und (B) bei Kontakt mit Wasser sehr schnell hydrolisieren würden.

Erfindungsgemäß ist es jedoch nicht erforderlich, die reaktionsfähigen Alkoxide direkt in komplexierter Form einzusetzen. Vielmehr ist es möglich, den oder die Komplexbildner kurz nach dem Start der Reaktion der Komponenten (A) und (B) hinzuzugeben.

Konkrete Beispiele für derartige Verbindungen sind Aluminium-sek.-butylat, Titanisopropoxid, Titanpropoxid, Titanbutoxid, Zirkonium-isopropoxid, Zirkoniumpropoxid, Zirkoniumbutoxid, Zirkoniumethoxid.

Insbesondere bei den reaktionsfähigeren Alkoxiden (beispielsweise von Al, Ti, Zr usw.) kann es sich jedoch empfehlen, diese direkt in komplexierter Form einzusetzen, wobei Beispiele für geeignete Komplexierungsmittel beispielsweise gesättigte wie auch ungesättigte Carbonsäuren und β-Dicarbonyl-verbindungen, wie beispielsweise Essigsäure, Milchsäure, Methacrylsäure, Acetylaceton und Acetessigsäurethylester, sind. Ebenfalls geeignet sind Ethanolamine sowie Alkylphosphate, wie beispielsweise Tri-, Diethanolamin und Butylphosphat.

Konkrete Beispiele für derartig komplexierte Alkoxide sind Titan-acetylacetonate, Titanbisethylacetoacetate, Triethanolamintitanate, Triethanolaminzirconate oder Zirconiumdiethylcitrate.

Der Komplexbildner (C), insbesondere eine Chelat-Verbindung bewirkt eine gewisse Komplexierung des Metallkations, so dass die Hydrolysegeschwindigkeit der Komponenten (A) und (B) reduziert wird.

Als weiteren Bestandteil umfasst das erfindungsgemäße, mit Wasser verdünnbare Konzentrat ein wasserverträgliches oder mit Wasser mischbares Lösemittel mit einem Siedepunkt von wenigstens 150 °C.

Beispielsweise kann Diethylenglykol oder Triethylenglykol eingesetzt werden. Weiterhin kommen beispielsweise Butyldiglykol, Propylenglykole, Butylenglykole, Polyethylenglykole als Komponente (D) in Betracht.

Die Aufgabe der hochsiedenden Lösungsmittel besteht insbesondere darin, dass im Austausch gegen den bei der Hydrolyse frei werdenden niedermolekularen Alkohol eine verbesserte Beständigkeit der erfindungsgemäßen Konzentrate erreicht werden kann.

In einer bevorzugten Ausführungsform der vorliegenden Erfindung ist das Konzentrat dadurch gekennzeichnet, dass die Komponenten (A) und (B) zusammen in einer Konzentration von wenigstens 20 Gew.-%, bezogen auf 100 Gew.-% der Komponenten (A), (B), (C) und (D) vorliegen und das Gewichtsverhältnis der Komponente (A) zu Komponente (B) im Bereich 1 zu 1 bis 1 zu 100 liegt. Ist die Gesamtmenge der Komponenten (A) und (B) in den erfindungsgemäßen Konzentraten zu gering, so lassen sich nur unter großen Schwierigkeiten gleichmäßig deckende Beschichtungen auf den verschiedensten Substraten herstellen. Da die Komponente (B) auch als Vernetzungsmittel für die Alkoxysilane der Komponenten (A) dienen, sollten diese wenigstens In äquimolaren Mengen bezogen auf die Komponente (A) in den erfindungsgemäßen Konzentraten anwesend sein. Dementsprechend ist es im Sinne der vorliegenden Erfindung besonders bevorzugt, wenn das Gewichtsverhältnis der Komponente (A) zu Komponente (B) im Bereich von 1 zu 1 bis 1 zu 100 liegt.

Besonders bevorzugt im Sinne der vorgenannten Aufgabenstellung ist ein Konzentrat dann, wenn die Komponenten (A) und (B) zusammen in einer Konzentration von wenigstens 30 Gew.-% bezogen auf 100 Gew.-% der Komponenten (A), (B), (C) und (D) vorliegen und das Gewichtsverhältnis der Komponente (A) zu Komponente (B) im Bereich 1 zu 1 bis 1 zu 25 liegt.

In einer weiteren bevorzugten Ausführungsform der vorliegenden Erfindung ist das Konzentrat dadurch gekennzeichnet, dass die Komponente (A), ein Organosol ist, das durch Hydrolyse von gegebenenfalls in organischen Lösemitteln gelösten Alkoxysilanen der allgemeinen Formel I, insbesondere Trialkoxysilanen und/oder Dialkoxysilanen, wobei R für gleiche oder verschiedene über ein C-Atom an das Siliziumatom gebundene, gegebenenfalls verzweigte Kohlenwasserstoffgruppen steht, die durch Sauerstoff-, Schwefel, Stickstoff oder die Gruppe NR", mit R" gleich Wasserstoff oder C₁ bis C₆-Alkyl unterbrochen sind und einen oder mehrere Substituenten aus der Gruppe der Halogene und der gegebenenfalls Amino-, Amido-, Carboxy-, Mercapto-, Isocyanato-, Acryloxy-, Methacryloxy oder Epoxygruppen tragen können mit einer verdünnten anorganischen oder organischen Säure erhältlich ist

Die erfindungsgemäß einzusetzende Komponente (B) wird in reiner Form oder auch in Form eines in einem Lösemittel gelösten Alkoxid eingesetzt werden. Besonders bevorzugt in diesem Sinne ist es, wenn die Komponente (B) bis zu 50 Gew.-% organisches Lösemittel, beispielsweise Methanol, Ethanol, n-Propanol, Isopropanol, Butanol enthält.

Allgemein ist es im Sinne der vorliegenden Erfindung besonders bevorzugt, wenn die Komponente (C) Carbonylverbindungen, Alkylphosphate, Poly-, Ethylen-, Propylen-, Butylenglykole, Poly-, Tri-, Diamine und/oder Ethanolamine umfasst.

Ganz besonders bevorzugt in diesem Sinne ist die Carbonylverbindung ausgewählt aus 1,3-Dicarbonylverbindungen.

Zur problemlosen Anwendung in Textilbetrieben kann zur Erhöhung des Flammpunktes des erfindungsgemäßen Konzentrats, insbesondere auf Temperaturen oberhalb 65 °C, insbesondere oberhalb 100 °C der bei der Hydrolyse entstehende, nieder siedende Alkohole ohne Beeinträchtigung der Produkteigenschaften destillativ entfernt werden. Die Entfernung der niedersiedenden Bestandteile aus dem Reaktionssystem erfolgt bevorzugt bei erhöhter Temperatur oder unter vermindertem Druck, vorzugsweise bei erhöhter Temperatur und vermindertem Druck, wobei die Temperatur zwischen 50° C und 200° C, bevorzugt zwischen 80° C und 170° C und besonders bevorzugt zwischen 130° C und 150° C liegt. Üblicherweise wird ein Druck zwischen 20 und 900 mbar, bevorzugt zwischen 50 und 250 mbar angelegt.

Als Grenzwert für den Flammpunkt des Konzentrates wird eine Temperatur gewählt, die weder gefahrgutrechtlich (Europäisches Übereinkommen über die Internationale Beförderung gefährlicher Güter auf der Straße, ADR) noch gefahrstoffrechtlich (Umgangsrecht, Richtlinie 67/548 EWG) eine Kennzeichnung mit "R10" (entzündlich) verlangt. Produkte mit einem Flammpunkt > 65° C müssen weder nach Umgangsrecht noch nach Transportrecht gekennzeichnet werden, somit ist die Verwendung in nicht explosionsgeschützten Anlagen als unproblematisch zu werten.

Zur Herstellung eines transparenten lagerstabilen Beschichtungsmittels aus den obengenannten, insbesondere transparenten, homophasigen Konzentraten werden diese mit Wasser in einem Gewichtsverhältnis von 100 zu 1 bis 1 zu 500 verdünnt.

Eine weitere Ausführungsform der vorliegenden Erfindung besteht in der Verwendung des erfindungsgemäßen Beschichtungsmittels zur Behandlung organischer und anorganischer Fasern und Textilien aus wässrigen Bädern und Anwendungsflotten durch Sprühen, Gießen, Fluten, Tauchen, Schleudern, Foulardieren, Walzen oder Drucken.

Dabei dient das erfindungsgemäße Konzentrat beziehungsweise das Beschichtungsmittel in der Regel nicht als Wirkstoff auf den anorganischen Fasern und Textilien, sondern erfordert die Kombination mit weiteren Textilbehandlungsmitteln. Insbesondere werden die erfindungsgemäßen Konzentrate und/oder die Beschichtungsmittel in Kombination mit Ausrüstungsmitteln und/oder mit Suspensionen oder Dispersionen organischer und/oder anorganischer Partikel und/oder Solen zur Erzeugung von Funktionalitäten, besonders bevorzugt in Kombination mit hydrophilen, hydrophoben, UV-Schutz-, Flammschutz-und/oder antimikrobiellen Ausrüstungsmitteln eingesetzt.

Darüber hinaus ist es mit Hilfe der vorliegenden Erfindung auch möglich, organische und anorganische Fasern und Textilien in Kombination mit Suspensionen oder Dispersionen organischer und/oder anorganischer Partikel und/oder Solen einzusetzen.

Zur Kondensation der Komponenten (A) und (B) ist es erforderlich, die mit dem erfindungsgemäßen Beschichtungsmittel versehenen Substrate einer erhöhten Temperatur auszusetzen. Zum einen dient die erhöhte Temperatur der Vervollständigung der Hydrolyse und Kondensationsreaktion und darüber hinaus auch dem mehr oder weniger vollständigen Entfernen des Lösungsmittels. Dementsprechend ist es im Sinne der vorliegenden Erfindung besonders bevorzugt, die behandelten textilen Materialien bei einer Temperatur im Bereich von 60° C bis 250° C im Verlauf von 10 Sekunden bis zu 10 Stunden zu trocknen.

Neben textilen Materialien ist es im Sinne der vorliegenden Erfindung in gleicher Weise auch möglich, andere Substrate mit den erfindungsgemäßen Beschichtungsmitteln zu versehen. Besonders bevorzugt im Sinne der vorliegenden Erfindung werden daher Substrate aus Holz, Papier, Leder, Glas, Metall und/oder polymeren Kunststoffen beschichtet.

Eine weitere Ausführungsform der vorliegenden Erfindung umfasst naturgemäß das nach dem Auftragen auf die Oberfläche des Materials zu trocknende Beschichtungsmittel, wie eingangs definiert.

### Ausführungsbeispiele:

### Vorhydrolysat 1:

234,34 g (1mol) 3-Glycidyloxypropyltrimethoxysilan wurden unter Rühren mit 15,3 g 0,1 n (0,85 mol H₂O) wässriger HCl-Lösung versetzt. Die schnell klar werdende Mischung wurde 2 Stunden bei Raumtemperatur gerührt. Man erhielt ein farbloses, klares Hydrolysat.

### Vorhydrolysat 2:

278,34 g (1mol) 3-Glycidyloxypropyltriethoxysilan wurden unter Rühren mit 15,3 g 0,1 n (0,85 mol H₂O) wässriger HCl-Lösung versetzt. Die schnell klar werdende Mischung wurde 2 Stunden bei Raumtemperatur gerührt. Man erhielt ein farbloses, klares Hydrolysat.

### Vorhydrolysat 3:

192 g (1mol) 3-Aminopropylmethyldiethoxysilan wurden unter Rühren mit 13,5 g 0,1 n (0,75 mol H₂O) wässriger HCl-Lösung versetzt. Die schnell klar werdende Mischung wurde 2 Stunden bei Raumtemperatur gerührt. Man erhielt ein farbloses, klares Hydrolysat.

### Herstellvorschrift 1 (erfindungsgemäß)

Für einen Ansatz von 300 g Sol wurde in einem Becherglas bei Raumtemperatur die Komponente A) vorgelegt und unter Rühren die Komponente B) zugegeben. Die Mischung wurde anschließend 30 Minuten gerührt. Daraufhin wurde langsam die Komponente C) zugegeben. Es war eine leichte Wärmetönung zu beobachten. Nach weiteren 30 Minuten Rühren wurde die Komponente D) zugesetzt. Die klare, gelbe Lösung wurde noch 30 Minuten nachgerührt. Anschließend wurde die Mischung mit Hilfe eines Rotationsverdampfers bei 150 °C und 200 mbar bis zur Erreichung eines Flammpunktes > 65° C destilliert. Die viskose, klare orangerote Lösung wurde langsam auf Raumtemperatur abgekühlt. Die anteiligen Gewichtsprozente der jeweiligen Komponenten, des Destillates und Flammpunkt des resultierenden Sols sind der Tabelle 1 zu entnehmen.

### Herstellvorschrift 2 (erfindungsgemäß):

Für einen Ansatz von 300 g Sol wurde in einem Dreihalskolben mit Rückflusskühler bei Raumtemperatur die Komponente A) vorgelegt und unter Rühren die Komponente B) zugegeben. Die Mischung wurde anschließend 30 Minuten gerührt. Daraufhin wurde langsam die Komponente C) zugegeben. Es war eine leichte Wärmetönung zu beobachten. Nach weiteren 30 Minuten Rühren wurde die Komponente D) zugesetzt. Die klare, gelbe Mischung wurde nun 5 Stunden bei 80° C unter Rückfluss gerührt. Anschließend wurde die Mischung mit Hilfe eines Rotationsverdampfers bei 150 °C und 200 mbar bis zur bis zur Erreichung eines Flammpunktes > 65° C destilliert. Die viskose, klare orangerote Lösung wurde langsam auf Raumtemperatur abgekühlt. Die anteiligen Gewichtsprozente der jeweiligen Komponenten, des Destillates und Flammpunkt des resultierenden Sols sind der Tabelle 1 zu entnehmen.

### Herstellvorschrift 3 (erfindungsgemäß):

Für einen Ansatz von 300 g Sol wurde in einem Dreihalskolben mit Rückflusskühler bei Raumtemperatur die Komponente D) vorgelegt und unter Rühren die Komponente C) zugegeben. Die Mischung wurde anschließend 30 Minuten nachgerührt. Daraufhin wurde langsam die Komponente B) und A) zugegeben. Es war eine leichte Wärmetönung zu beobachten. Die klare, gelbe Mischung wurde nun 5 Stunden bei 80° C unter Rückfluss gerührt. Anschließend wurde die Mischung mit Hilfe eines Rotationsverdampfers bei 150 °C und 200 mbar bis zur bis zur Erreichung eines Flammpunktes > 65° C destilliert. Die viskose, klare orangerote Lösung wurde langsam auf Raumtemperatur abgekühlt. Die anteiligen Gewichtsprozente der jeweiligen Komponenten, des Destillates und Flammpunkt des resultierenden Sols sind der Tabelle 1 zu entnehmen.

Herstellvorschrift eines silberhaltigen Ausrüstungsmittels nach DE 1037399 A1:

16,064 g einer 5 % wässrigen Silbernitratlösung wurden unter Rühren mit 3,235 g 2-Aminoethyl-3-aminopropyltriethoxysilan tropfenweise bei Raumtemperatur versetzt. Die spontane Eindunklung der Lösung aufgrund der Ausbildung von Silberoxidpartikeln wurde durch weitere Zugabe der stickstoffhaltigen Komponente wieder aufgehoben, so dass unter leichter Erwärmung der Reaktionslösung eine transparente Lösung resultierte.

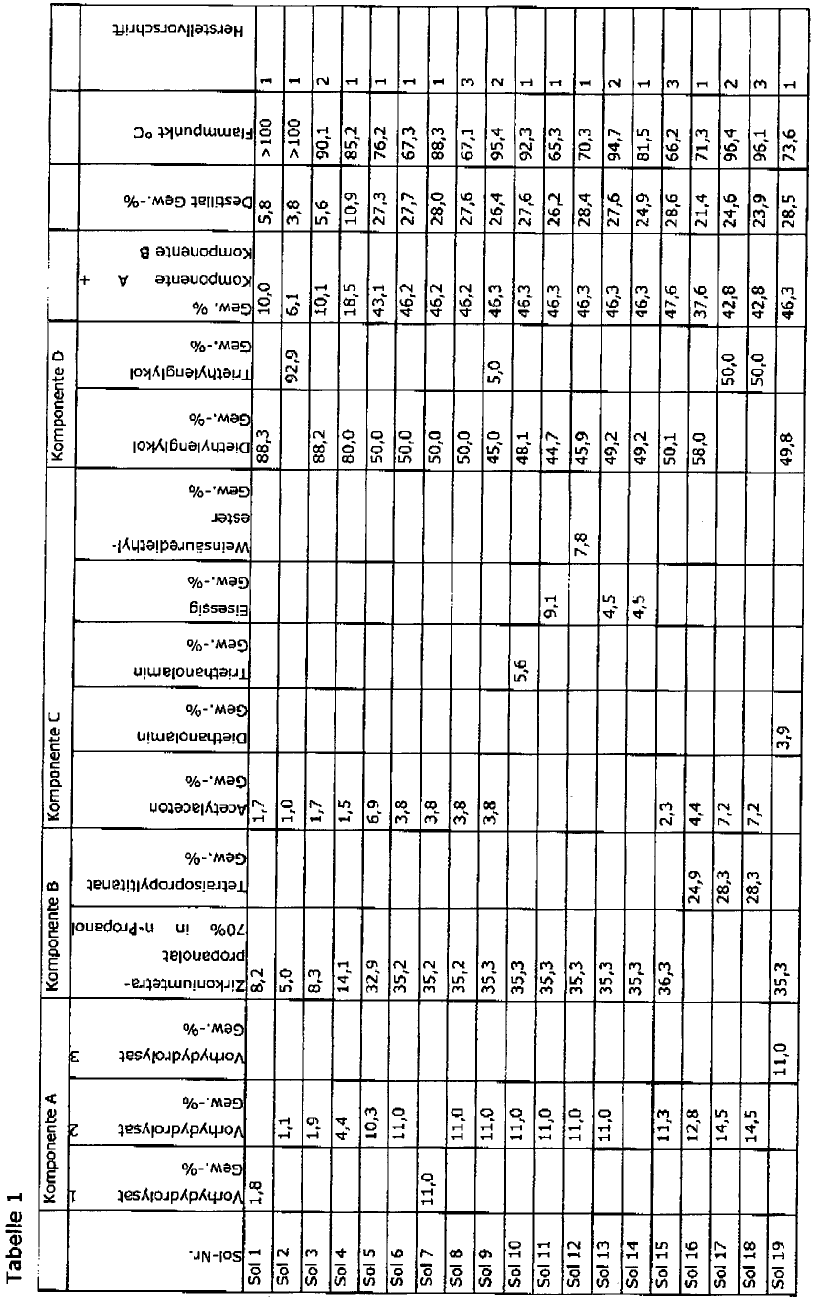

### Ermittlung des Flammpunkts:

Der Flammpunkt wurde angelehnt an die NORM DIN EN 22719 bestimmt.

### Bereitung einer Beschichtungsflotte:

In einem Becherglas wurden 200 g entmineralisiertes Wasser mit Essigsäure auf einen pH-Wert von 5,5 eingestellt und unter Rühren langsam mit einem Sol nach Tabelle I versetzt. Hierbei entstand eine farblose bis gelbliche, transparente Lösung. In Tabelle 2 sind die Zusammensetzungen der eingesetzten Beschichtungsflotten (B0 bis B21) beschrieben.

**Tabelle 2:**

| Beschichtungflotte | Sol-Nr. | Einsatzmenge Sol in g | Einsatzmenge silberhaltiges Ausrüstungsmittel in g | Einsatzmenge Weichmacherkomponente in g |
|---|---|---|---|---|
| B0 | - | 0,0 | 0,2 | |
| B1 | Sol 1 | 46,1 | 0,2 | |
| B2 | Sol 2 | 75,5 | 0,2 | |
| B3 | Sol 3 | 46,1 | 0,2 | |
| B4 | Sol 4 | 25,0 | 0,2 | 5,0 |
| B5 | Sol 5 | 10,7 | 0,2 | |
| B6 | Sol 6 | 10,0 | 0,2 | |
| B7 | Sol 7 | 10,0 | 0,2 | 5,0 |
| B8 | Sol 8 | 10,0 | 0,2 | |
| B9 | Sol 9 | 10,0 | 0,2 | |
| B10 | Sol 10 | 10,0 | 0,2 | |
| B11 | Sol 11 | 10,0 | 0,2 | |
| B12 | Sol 12 | 10,0 | 0,2 | |
| B13 | Sol 13 | 10,0 | 0,2 | |
| B14 | Sol 14 | 10,0 | 0,2 | 5,0 |
| B15 | Sol 15 | 9,7 | 0,2 | |
| B16 | Sol 16 | 12,3 | 0,2 | |
| B17 | Sol 17 | 10,8 | 0,2 | 5,0 |
| B18 | Sol 18 | 10,8 | 0,2 | |
| B19 | Sol 19 | 10,0 | 0,2 | |
| B20 | - | 0,0 | 0,0 | 5,0 |
| B21 | - | 0,0 | 0,0 | |

### Textilausrüstung:

Eine 20 x 30 cm große Probe eines Baumwoll-Polyester Mischgewebes (35%/65%) mit einem Warengewicht von 210 g/m² wurde mit einem Beschichtungsflotte nach Tabelle II über einen Foulard ausgerüstet, auf 60% Flottenaufnahme abgequetscht und während 2 min bei 120° C getrocknet und anschließend eine Minute bei 150° C kondensiert.

### Haushaltswäsche:

Die ausgerüsteten Proben wurden in Anlehnung an die Norm EN ISO 6330 gewaschen. Hierzu wurde eine Electrolux FOM 71 CLS Waschmaschine Typ A-Frontlader mit horizontal umlaufender Trommel sowie ein perboratfreies Waschmittel (ECE-2) eingesetzt. Gewaschen wurde bei 40°C im Normalwaschgang. Zur Einhaltung des erforderlichen Waschgewichts von 2 kg wurde die Waschtrommel mit einem Polyesterbegleitgewebe aufgefüllt.

### Waschpermanenz:

Die Waschpermanenz des Beschichtungsmittels sowie dessen permanente Fixiereigenschaften wurden über die Bestimmung der Konzentrationen verschiedener Metalle auf den ausgerüsteten Proben (P1 - P20) im Vergleich zu einer unausgerüsteten Probe (P21) sowie eine Probe (P0), behandelt nur mit dem silberhaltigen Ausrüstungsmittel überprüft.

Hierfür eigneten sich besonders die, in den entsprechenden Beschichtungsmitteln verwandten Metallatome Zirkon und Titan, sowie das Edelmetall Silber, das über das zugesetzte Ausrüstungsmittel mit Hilfe des Beschichtungsmittels waschpermanent auf die Proben fixiert wurde.

Alle Proben (P0 - P21) wurden 40 Haushaltswäschen unterzogen, wobei diese nach einer, 20 und 40 Wäschen der Waschmaschine entnommen und getrocknet sowie die Metallgehalte nach DIN 38406E22 bestimmt wurden. Die ermittelten Werte sind in Tabelle 3 aufgeführt.

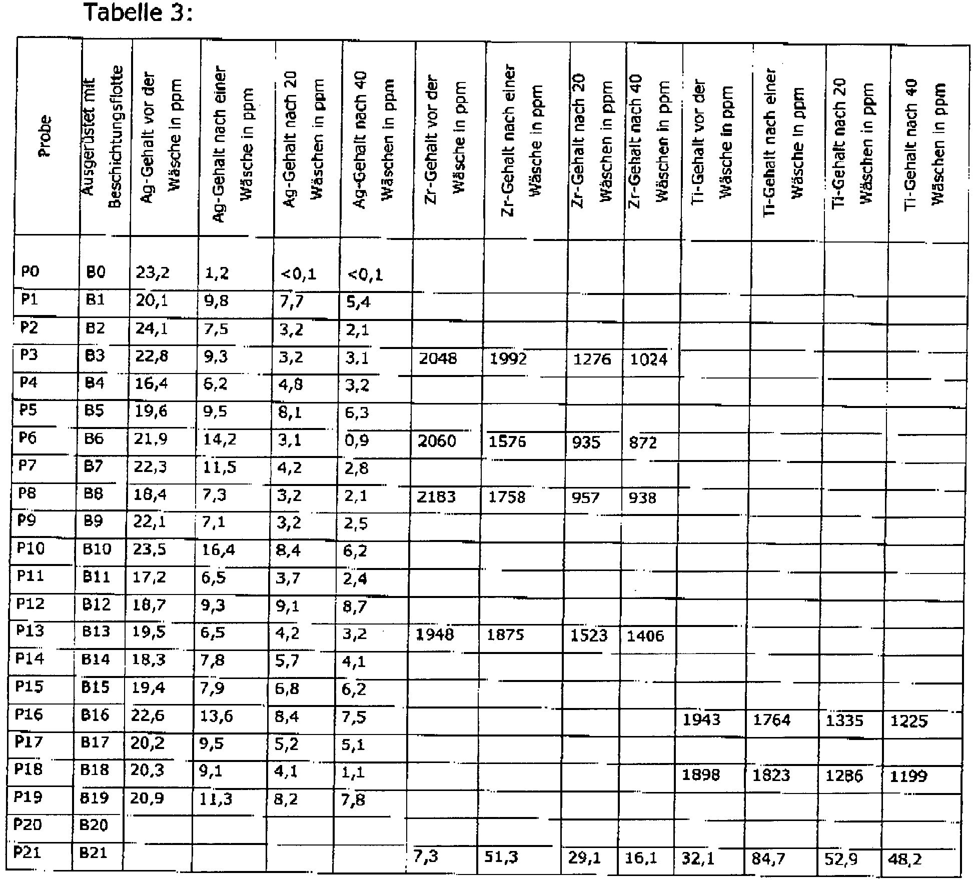

### Weichgriff:

Als textile Weichmacherkomponente wurden den Beschichtungsflotten B4, B7, B14 und B17 25 g/Liter Tubingal^{®} SMF, eine silikonhaltige Mirkoemulsion der CHT R. Beitlich GmbH zugesetzt. Die entsprechenden ausgerüsteten Proben wurden vor und nach den Haushaltswäschen bezüglich ihres Weichgriffs gegen die Proben P20 und P21, wobei P20 nur mit der Weichmacherkomponente ausgerüstet wurde und P21unbehandelt war, getestet.

Tabelle 4 zeigt die Auswertung der Griffbeurteilung, hierfür wurde ein erfahrenes Team zusammengestellt, das die anonymisierten Griffmuster mit Hilfe eines Handtests bewertet. Die Proben wurden vor und nach den Haushaltswäschen beurteilt, wobei folgende Bewertung vorgenommen wurde:
+++ = sehr weicher Griff
++ = weicher Griff
+ = geringe Weichgriffeffekte
o = keine Weichgriffeffekte
- = verhärteter Griff.

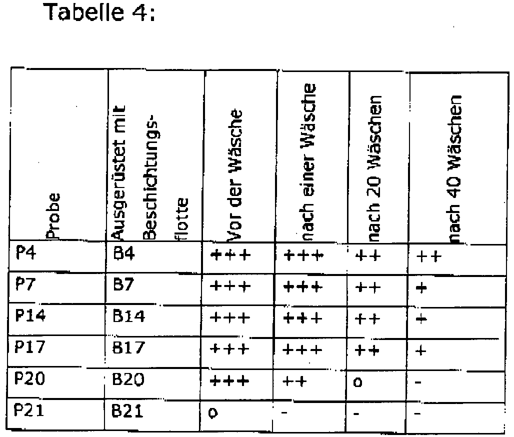

## Patentansprüche

1. Verfahren zur Herstellung von Sol basierenden wasserverdünnbaren Konzentraten durch Abmischung folgender Komponenten:
(A) 0,5 bis 25 Gew.-% eines Organosols, erhältlich durch Hydrolyse und Kondensation eines oder mehrerer Trialkoxysilane und/oder Dialkoxysilane der allgemeinen Formel I
R₄₋ₓSi(OR')ₓ (I)
wobei
R für gleiche oder verschiedene über ein C-Atom an das Siliziumatom gebundene, gegebenenfalls substituierte Kohlenwasserstoffgruppen mit 1 bis 22 C-Atomen steht, die gegebenenfalls durch Sauerstoff, Schwefel, Stickstoff oder die Gruppe NR", mit R" gleich Wasserstoff oder C₁ bis C₁₄-Alkyl unterbrochen sind,
die Reste R' gleich oder verschieden voneinander, jeweils eine gegebenenfalls substituierte Kohlenwasserstoffgruppe mit 1 bis 8 Kohlenstoffatomen darstellen die gegebenenfalls durch Sauerstoff, Schwefel, Stickstoff oder die Gruppe NR" mit der oben genannten Bedeutung unterbrochen sind und
x 2 oder 3 ist,
(B) 4 bis 55 Gew.-% eines oder mehrerer Alkoxide der allgemeinen Formel II
Me (OR')ₙ (II)
wobei
Me für Ti, Zr, Hf, Al, n für die Wertigkeit des Metallkations steht und R' die oben genannte Bedeutung hat,
(C) 0,1 bis 15 Gew.-% eines oder mehrerer Komplexbildners zur Reduktion der Hydrolysegeschwindigkeit der Komponenten (A) und (B) und
(D) 5 bis 95 Gew.-% eines wasserverträglichen oder mit Wasser mischbaren Lösemittels mit einem Siedepunkt von wenigstens 150°C,
jeweils bezogen auf 100 Gew.-% der Komponenten (A), (B), (C) und (D),
**und anschließender destillativer Entfernung von Alkoholen** mit **einem Siedepunkt von bis zu 150°C, zur Einstellung des Flammpunktes, und gegebenenfalls Zugabe von Wasser.**

2. Verfahren nach Anspruch 1, **dadurch gekennzeichnet, dass** man die Komponenten (A) und (B) zusammen in einer Konzentration von wenigstens 20 Gew.-% bezogen auf 100 Gew.-% der Komponenten (A), (B), (C) und (D) vorlegt und das Gewichtsverhältnis der Komponente (A) zu Komponente (B) im Bereich 1 zu 1 bis 1 zu 100 einstellt.

3. Verfahren nach Anspruch 1, **dadurch gekennzeichnet, dass** man die Komponenten (A) und (B) zusammen in einer Konzentration von wenigstens 30 Gew.-% bezogen auf 100 Gew.-% der Komponenten (A), (B), (C) und (D) vorlegt und das Gewichtsverhältnis der Komponente (A) zu Komponente (B) im Bereich 1 zu 1 bis 1 zu 25 einstellt.

4. Verfahren nach einem der Ansprüche 1 bis 3, **dadurch gekennzeichnet, dass** die Komponente (A), ein Organosol ist, das durch Hydrolyse von gegebenenfalls in organischen Lösemitteln gelösten-Trialkoxysilanen und/oder Dialkoxysilanen, wobei R einen oder mehrere Substituenten aus der Gruppe der Halogene und der gegebenenfalls Amino-, Amido-, Carboxy-, Mercapto-, Isocyanato-, Hydroxy-, Acryloxy-, Methacryloxy-, Epoxy- oder perfluorierte Alkylgruppen umfasst, die mit einer verdünnten anorganischen oder organischen Säure erhältlich sind.

5. Verfahren nach einem der Ansprüche 1 bis 4, **dadurch gekennzeichnet, dass** man eine Komponente (B) einsetzt, die bis zu 50 Gew.-% organisches Lösemittel enthält.

6. Verfahren nach einem der Ansprüche 1 bis 5, **dadurch gekennzeichnet, dass** man eine die Komponente (C) einsetzt, die Carbonylverbindungen, Poly-, Ethylen-, Propylen-, Butylenglykole, Poly-, Tri-, Diamine und/oder Ethanolamine sowie Alkylphosphate umfasst.

7. Verfahren nach Anspruch 6, **dadurch gekennzeichnet, dass** die Carbonylverbindung ausgewählt ist aus 1,3-Dicarbonylverbindungen.

8. Verfahren nach einem der Ansprüche 1 bis 7, **dadurch gekennzeichnet, dass** die Komponente (D) ein Wasser lösliches Lösemittel in einer Menge von 5 bis 85 Gew.-% umfasst.

9. Transparentes und lagerstabiles Beschichtungsmittel enthaltend ein Konzentrat- erhältlich nach einem der Ansprüche 1 bis **8** und Wasser in einem Gewichtsverhältnis von 100 zu 1 bis 1 zu 500.

10. Beschichtungsmittel nach Anspruch **9** mit einem Flammpunkt von wenigstens 100 °C.

11. Verwendung des Beschichtungsmittels nach Anspruch **9** oder **10** zur Behandlung organischer und anorganischer Fasern und Textilien aus wässrigen Bädern und Anwendungsflotten durch Sprühen, Gießen, Fluten, Tauchen, Schleudern, Foulardieren, Walzen oder Drucken.

12. Verwendung nach Anspruch **11** in Kombination mit Ausrüstungsmitteln und/oder mit Suspensionen oder Dispersionen organischer und/oder anorganischer Partikel und/oder Solen zur Erzeugung von Funktionalitäten, insbesondere in Kombination mit hydrophilen, hydrophoben, UV-Schutz-, Flammschutz- und/oder antimikrobiellen Ausrüstungsmitteln.

13. Verwendung des Beschichtungsmittels nach Anspruch **9** oder **10** zur Behandlung organischer und anorganischer Fasern und Textilien in Kombination mit Suspensionen oder Dispersionen organischer und/oder anorganischer Partikel und/oder Solen.

14. Verwendung nach einem der Ansprüche **11** bis **13,** wobei man die behandelten textilen Materialien bei einer Temperatur im Bereich von 60° C bis 250° C im Verlauf von 10 Sekunden bis zu 10 Stunden trocknet.

15. Verwendung des Beschichtungsmittels nach Anspruch **9** oder **10** zur Behandlung von Substraten aus Holz, Papier, Leder, Glas, Metallen und/ oder polymeren Kunststoffen.

16. Textiles Material umfassend ein nach dem Auftragen auf die Oberfläche des Materials getrocknetes Beschichtungsmittel nach Anspruch **9** oder **10.**

## Claims

1. A process for the preparation of sol-based water-dilutable concentrates by mixing the following components:
(A) from 0.5 to 25% by weight of an organosol obtainable by the hydrolysis and condensation of one or more trialkoxysilanes and/or dialkoxysilanes of general formula I
R₄₋ₓSi(OR')ₓ (I)
wherein
R represents the same or different optionally substituted hydrocarbon groups with from 1 to 22 carbon atoms which are bonded to the silicon atom through a carbon atom, optionally interrupted by oxygen, sulfur, nitrogen or the group NR", with R" being hydrogen or C₁ to C₁₄ alkyl;
the radicals R' are the same or different and each represent an optionally substituted hydrocarbon group with from 1 to 8 carbon atoms, optionally interrupted by oxygen, sulfur, nitrogen or the group NR" with the meaning mentioned above; and
x is 2 or 3;
(B) from 4 to 55% by weight of one or more alkoxides of general formula II
Me(OR')ₙ (II)
wherein
Me represents Ti, Zr, Hf or Al, n is the valence of the metal cation, and R' has the meaning mentioned above;
(C) from 0.1 to 15% by weight of one or more complexing agents for reducing the hydrolysis rate of components (A) and (B); and
(D) from 5 to 95% by weight of a water-compatible or water-miscible solvent having a boiling point of at least 150 °C;
respectively based on 100% by weight of components (A), (B), (C) and (D);
followed by removing alcohols having a boiling point of up to 150 °C by distillation to adjust the flash point, and optionally adding water.

2. The process according to claim 1, **characterized in that** components (A) and (B) are charged together in a concentration of at least 20% by weight, based on 100% by weight of components (A), (B), (C) and (D), and the weight ratio of component (A) to component (B) is adjusted within a range of from 1:1 to 1:100.

3. The process according to claim 1, **characterized in that** components (A) and (B) are charged together in a concentration of at least 30% by weight, based on 100% by weight of components (A), (B), (C) and (D), and the weight ratio of component (A) to component (B) is adjusted within a range of from 1:1 to 1:25.

4. The process according to any of claims 1 to 3, **characterized in that** component (A) is an organosol obtainable by the hydrolysis of trialkoxysilanes and/or dialkoxysilanes, optionally dissolved in organic solvents, wherein R represents one or more substituents selected from the group consisting of halogens and optionally substituted amino, amido, carboxy, mercapto, isocyanato, hydroxy, acryloxy, methacryloxy, epoxy or perfluorinated alkyl groups, with a diluted inorganic or organic acid.

5. The process according to any of claims 1 to 4, **characterized in that** component (B) contains up to 50% by weight of organic solvent.

6. The process according to any of claims 1 to 5, **characterized in that** component (C) comprises carbonyl compounds, polyethylene, -propylene, -butylene glycols, polytri-, -diamines and/or ethanolamines as well as alkyl phosphates.

7. The process according to claim 6, **characterized in that** said carbonyl compound is selected from 1,3-dicarbonyl compounds.

8. The process according to any of claims 1 to 7, **characterized in that** component (D) comprises a water-soluble solvent in an amount of from 5 to 85% by weight.

9. A transparent storage-stable coating agent containing a concentrate obtainable according to any of claims 1 to 8 and water at a weight ratio of from 100:1 to 1:500.

10. The coating agent according to claim 9 having a flash point of at least 100 °C.

11. Use of the coating agent according to claim 9 or 10 for the treatment of organic and inorganic fibers and textiles from aqueous baths and application liquors by spraying, casting, flow coating, dipping, centrifuging, padding, rolling or printing.

12. The use according to claim 11 in combination with finishing agents and/or with suspensions or dispersions of organic and/or inorganic particles and/or sols to produce functionalities, especially in combination with hydrophilic, hydrophobic, UV-protecting, flame-retardant and/or antimicrobial finishing agents.

13. Use of the coating agent according to claim 9 or 10 for the treatment of organic and inorganic fibers and textiles in combination with suspensions or dispersions of organic and/or inorganic particles and/or sols.

14. The use according to any of claims 11 to 13, wherein the treated textile materials are dried at a temperature within a range of from 60 °C to 250 °C in the course of 10 seconds up to 10 hours.

15. Use of the coating agent according to claim 9 or 10 for the treatment of substrates made of wood, paper, leather, glass, metals and/or polymeric plastics.

16. A textile material comprising a coating agent according to claim 9 or 10 dried onto the surface of the material after the application.

## Revendications

1. Procédé pour préparer des concentrés à base d'un sol, diluables dans l'eau, consistant à mélanger les ingrédients suivants :
(A) 0,5 à 25 % en poids d'un organosol pouvant être obtenu par l'hydrolyse et la condensation d'un ou plusieurs trialcoxysilanes et/ou dialcoxysilanes de formule générale I
R₄₋ₓSi(OR')ₓ (I)
où
R représente des groupes hydrocarbonés avec 1 à 22 atomes de carbone, identiques ou différents, éventuellement substitués, liés à l'atome de silicium par l'intermédiaire d'un atome de carbone, éventuellement interrompus par oxygène, soufre, azote ou le groupement NR", R" étant hydrogène ou alkyle en C₁ à C₁₄ ;
les restes R', identiques ou différents, respectivement représentent un groupe hydrocarboné avec 1 à 8 atomes de carbone, éventuellement substitué, éventuellement interrompu par oxygène, soufre, azote ou le groupement NR" avec la signification indiquée ci-dessus ; et
x est 2 ou 3 ;
(B) 4 à 55 % en poids d'un ou plusieurs alcoxydes de formule générale II
Me(OR')ₙ (II)
où
Me représente Ti, Zr, Hf ou Al, n représente la valence du cation métallique, et R' a la signification indiquée ci-dessus ;
(C) 0,1 à 15 % en poids d'un ou plusieurs agents complexants destinés à réduire la vitesse d'hydrolyse des ingrédients (A) et (B) ; et
(D) 5 à 95 % en poids d'un solvant compatible avec l'eau ou miscible à l'eau, ayant un point d'ébullition d'au moins 150 °C ;
respectivement par rapport à 100 % en poids des ingrédients (A), (B), (C) et (D) ;
puis à éliminer par distillation les alcools ayant un point d'ébullition allant jusqu'à 150 °C pour ajuster le point d'éclair, et éventuellement à ajouter de l'eau.

2. Procédé selon la revendication 1, **caractérisé en ce que** les ingrédients (A) et (B) sont chargés ensemble à une concentration d'au moins 20 % en poids, par rapport à 100 % en poids des ingrédients (A), (B), (C) et (D), et le rapport pondéral de l'ingrédient (A) à l'ingrédient (B) est ajusté dans l'intervalle allant de 1/1 à 1/100.

3. Procédé selon la revendication 1, **caractérisé en ce que** les ingrédients (A) et (B) sont chargés ensemble à une concentration d'au moins 30 % en poids, par rapport à 100 % en poids des ingrédients (A), (B), (C) et (D), et le rapport pondéral de l'ingrédient (A) à l'ingrédient (B) est ajusté dans l'intervalle allant de 1/1 à 1/25.

4. Procédé selon l'une quelconque des revendications 1 à 3, **caractérisé en ce que** l'ingrédient (A) est un organosol pouvant être obtenu par l'hydrolyse de trialcoxysilanes et/ou dialcoxysilanes, éventuellement dissouts dans des solvants organiques, où R représente un ou plusieurs substituants choisis dans le groupe constitué d'halogènes et de groupes amino, amido, carboxyle, mercapto, isocyanato, hydroxyle, acryloxy, méthacryloxy, époxy ou alkyle perfluoré, éventuellement substitués, avec un acide inorganique ou organique dilué.

5. Procédé selon l'une quelconque des revendications 1 à 4, **caractérisé en ce qu'**un ingrédient (B) contenant jusqu'à 50 % en poids de solvant organique est utilisé.

6. Procédé selon l'une quelconque des revendications 1 à 5, **caractérisé en ce que** l'ingrédient (C) comprenant des composés carbonylés, des polyéthylène glycols, des polypropylène glycols, des polybutylène glycols, des polyamines, des triamines, des diamines et/ou des éthanolamines ainsi que des alkylphosphates est utilisé.

7. Procédé selon la revendication 6, **caractérisé en ce que** le composé carbonylé est choisi parmi les composés 1,3-dicarbonylés.

8. Procédé selon l'une quelconque des revendications 1 à 7, **caractérisé en ce que** l'ingrédient (D) comprend un solvant hydrosoluble en une quantité de 5 à 85 % en poids.

9. Agent d'enrobage transparent et stable au stockage, contenant un concentré pouvant être obtenu selon l'une des revendications 1 à 8 et de l'eau dans un rapport pondéral de 100/1 à 1/500.

10. Agent d'enrobage selon la revendication 9, ayant un point d'éclair d'au moins 100 °C.

11. Utilisation de l'agent d'enrobage selon la revendication 9 ou 10 pour le traitement de fibres et textiles organiques et inorganiques provenant de bains aqueux et de bains d'application, par pulvérisation, coulage, revêtement fluide, trempage, centrifugation, foulardage, calandrage ou impression.

12. Utilisation selon la revendication 11 en combinaison avec des agents de finissage et/ou avec des suspensions ou dispersions de particules et/ou sols organiques et/ou inorganiques pour produire des fonctionnalités, notamment en combinaison avec des agents de finissage hydrophiles, hydrophobes, anti-UV, ignifuges et/ou antimicrobiens.

13. Utilisation de l'agent d'enrobage selon la revendication 9 ou 10 pour le traitement de fibres et textiles organiques et inorganiques en combinaison avec des suspensions ou dispersions de particules et/ou sols organiques et/ou inorganiques.

14. Utilisation selon l'une quelconque des revendications 11 à 13, dans laquelle les matériaux textiles traités sont séchés à une température comprise entre 60 °C et 250 °C pendant 10 secondes jusqu'à 10 heures.

15. Utilisation de l'agent d'enrobage selon la revendication 9 ou 10 pour le traitement de substrats en bois, papier, cuir, verre, métaux et/ou matières plastiques polymères.

16. Matériau textile comprenant un agent d'enrobage selon la revendication 9 ou 10 séché après être appliqué sur la surface du matériau.
